# EUROPEAN PATENT SPECIFICATION

(11) **EP 3 896 030 B1**
(45) Date of publication and mention of the grant of the patent: **01.03.2023**
(21) Application number: 21164531.2
(22) Date of filing: 24.03.2021
(51) Int. Cl.: H01G 5/16, H01G 5/38, H02N 1/08

(54) **MANUFACTURING METHOD OF POWER GENERATION ELEMENT AND POWER GENERATION ELEMENT**
HERSTELLUNGSVERFAHREN FÜR STROMERZEUGUNGSELEMENT UND STROMERZEUGUNGSELEMENT
PROCÉDÉ DE FABRICATION D'UN ÉLÉMENT DE GÉNÉRATION DE PUISSANCE ET ÉLÉMENT DE GÉNÉRATION D'ÉNERGIE

(30) Priority: 27.03.2020 JP 2020057713
(43) Date of publication of application: 20.10.2021
(73) Proprietor: The University of Tokyo, Bunkyo-ku, Tokyo 113-8654 (JP); Saginomiya Seisakusho, Inc., Tokyo 165-0033 (JP)
(72) Inventor: TOSHIYOSHI, Hiroshi, Tokyo, 1138654 (JP); SHIMOMURA, Noriko, Sayama-shi, Saitama 3501395 (JP); ASHIZAWA, Hisayuki, Sayama-shi, Saitama 3501395 (JP)
(74) Representative: V.O.

(56) References cited:
- EP-A1- 3 244 527
- EP-A1- 3 358 739
- WO-A1-2018/101046

## Description

### TECHNICAL FIELD

The present invention relates to a manufacturing method of a power generation element and a power generation element.

### BACKGROUND ART

A vibration-driven energy harvester having a movable comb tooth electrode and a fixed comb tooth electrode which are electretized is known (Patent Literature: PTL 1).

### CITATION LIST

### PATENT LITERATURE

Patent Literature 1: Japanese Laid-Open Patent Publication No. 2016-209935

EP 3 358 739 A1 discloses a vibration energy harvester including a first electrode; and a second electrode that can be displaced relative to the first electrode along a predetermined vibrating direction. At least either of a surface of the first electrode and a surface of the second electrode facing opposite each other is electrically charged. Power is generated as the second electrode becomes displaced causing a change in electrostatic capacitance between the first electrode and the second electrode. A range having included therein at least a vibrational center of the second electrode, over which the electrostatic capacitance remains unchanged even as the second electrode is displaced, is set.

EP 3 244 527 A1 discloses an electret element including an Si layer, an SiO 2 layer formed at a surface of the Si layer; and an electret formed at the SiO 2 layer near an interface of the SiO 2 layer and the Si layer.

WO 2018/101046 A1 discloses a vibration power generation device with: a movable side section capable of vibration in a predetermined vibration direction as a result of mechanical vibration energy applied from the exterior, said movable side section being provided with a first surface along the vibration direction; and a fixed side section provided with a second surface facing the first surface of the movable side section with a predetermined interval therebetween, said fixed side section being configured so as to be positionally fixed even against vibration energy. A plurality of protrusions protruding in a direction orthogonal to the vibration direction are formed so as to be arranged like comb teeth in the vibration direction on each of the first surface of the movable side section and the second surface of the fixed side section. An electret film is formed on at least the first surface of the movable side section or on at least the second surface of the fixed side section. The vibration power generation device is configured so that the spring constant of the movable side section is modulated as a function of the position of the vibration direction by electrostatic force acting between the movable side section and the fixed side section.

### SUMMARY OF INVENTION

### TECHNICAL PROBLEM

In the vibration-driven energy harvester described in PTL 1, a prober needle is brought into contact with a movable comb tooth electrode and a fixed comb tooth electrode to apply a voltage to form electret, while heating substrate including the movable comb tooth electrode and the fixed comb tooth electrode. In the vibration-driven energy harvester of PTL 1, since it is necessary to secure a large area in the vibration-driven energy harvester for contacting the prober needle with the substrate heated, the area of the vibration-driven energy harvester may increase. Therefore, the number of vibration-driven energy harvesters can be manufactured per one wafer may decrease.

### SOLUTION TO PROBLEM

According to the invention, in a first aspect, a manufacturing method of a power generation element that performs power generation by vibration, comprises: preparing a substrate; forming on the substrate a plurality of power generation elements each including a first electrode and a movable portion that has a movable electrode opposing to the first electrode; and forming on the substrate a first connecting portion by which the first electrodes of the plurality of power generation elements are electrically and mutually connected with one another and a second connecting portion by which the movable electrodes of the plurality of power generation elements are electrically and mutually connected with one another.

According to a 2nd aspect of the present invention, in the manufacturing method of power generation element according to 1st aspect, it is preferable that heating the substrate and supplying voltage to the first connecting portion and the second connecting portion.

According to a 3rd aspect of the present invention, in the manufacturing method of power generation element according to 1st or 2nd aspect, it is preferable that the power generation element includes a second electrode; the movable electrode is provided between the first electrode and the second electrode; and the first connecting portion electrically connects the first electrodes and the second electrodes of the plurality of power generation elements.

According to a 4th aspect of the present invention, in the manufacturing method of power generation element according to 3rd aspect, it is preferable that the power generation element includes a third electrode and a fourth electrode provided, so as to interpose the movable electrode therebetween; and the first connecting portion electrically connects the first electrodes, the second electrodes, the third electrodes, and the fourth electrodes of the plurality of power generation elements.

According to a 5th aspect of the present invention, in the manufacturing method of power generation element according to any one of the 1st to 4th aspects, it is preferable that cutting out the power generation elements from the substrate.

According to a 6th aspect of the present invention, in the manufacturing method of power generation element according to any one of the 1st to 5th aspects, it is preferable that removing each portion of the first connecting portion and the second connecting portion provided up to an end portion of the power generation element.

According to the invention, in a 7th aspect, a power generation element that performs power generation by vibration, comprises: an element substrate provided with a first electrode and a movable portion that has a movable electrode opposing to the first electrode; a first connecting portion connected to the first electrode and provided up to an end portion of the element substrate; and a second connecting portion connected to the movable portion and provided up to the end portion of the element substrate.

According to an 8th aspect of the present invention, in the power generation element according to 7th aspect, it is preferable that the element substrate includes a second electrode; the movable electrode is provided between the first electrode and the second electrode; and the power generation element further comprises a third connecting portion connected to the second electrode and provided up to the end portion of the element substrate.

According to a 9th aspect of the present invention, in the power generation element according to 8th aspect, it is preferable that a third electrode and a fourth electrode provided with the movable electrode therebetween; a fourth connecting portion connected to the third electrode and provided up to the end portion of the element substrate; and a fifth connecting portion connected to the fourth electrode and provided up to the end portion of the element substrate.

According to a 10th aspect of the present invention, in the power generation element according to 9th aspect, it is preferable that the third connecting portion and the fourth connecting portion each include a plurality of portions extending in different directions to the end portion of the element substrate.

According to a 11th aspect of the present invention, in the power generation element according to 10th aspect, it is preferable that the second electrode and the fourth electrode are connected with each other via the third connecting portion and the fifth connecting portion.

According to a 12th aspect of the present invention, in the power generation element according to 11th aspect, it is preferable that the first electrode and the third electrode are connected with each other via the first connecting portion and the fourth connecting portion.

### ADVANTAGEOUS EFFECTS OF INVENTION

According to the present invention, it is possible to increase the number of vibration-driven energy harvesters which can be manufactured per one wafer.

### BRIEF DESCRIPTION OF DRAWINGS

FIG 1 is a view showing a configuration example of a power generation element according to the first embodiment.
FIG 2 is a plan view showing an example of a wafer on which the power generation element according to the first embodiment is formed.
FIG 3 is a view showing a configuration example of a part of the wafer on which the power generation element according to the first embodiment is formed.
FIG 4 is a view showing another configuration example of the power generation element according to the first embodiment.
FIG 5 is a view showing a configuration example of a part of the wafer on which the power generation element according to the variation 1 is formed.
FIG 6 is a view showing a configuration example of a part of the wafer on which the power generation element according to the variation 2 is formed.
FIG 7 is a view showing a configuration example of a part of the wafer on which the power generation element according to the variation 3 is formed.
FIG 8 is a view showing a configuration example of the power generation element according to the variation 4.
FIG 9 is a view showing a configuration example of the power generation element according to the variation 5.
FIG 10 is a view showing a configuration example of a part of the wafer on which the power generation element according to the variation 5 is formed.

### DESCRIPTION OF EMBODIMENTS

### First Embodiment

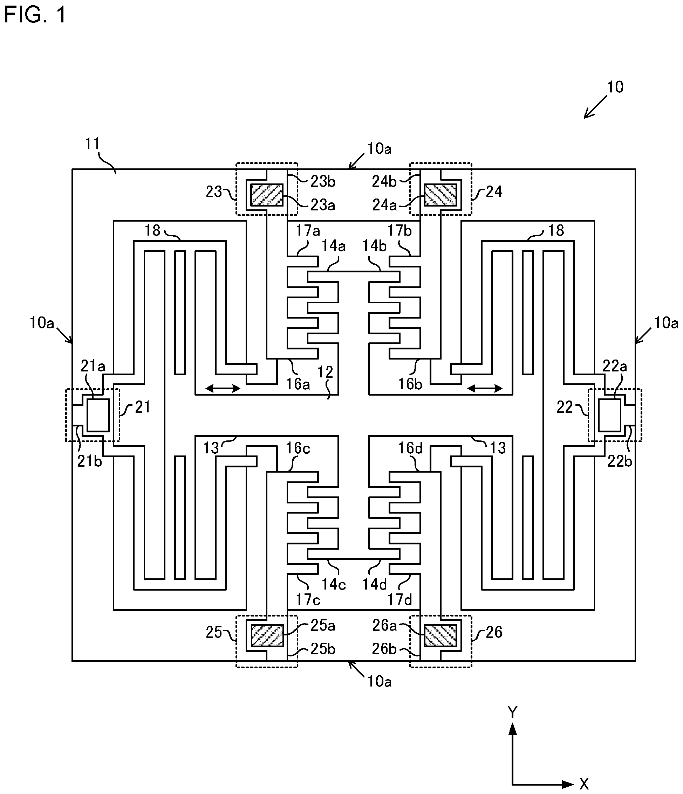

FIG 1 is a view showing a configuration example of a power generation element according to the first embodiment. A power generation element (a vibration-driven energy harvester) 10 includes a support frame (support member) 11 and a movable portion 12, and as will be described later, performs power generation using vibration. The vibration-driven energy harvester 10 is manufactured by using MEMS technology with a silicon substrate or an SOI (Silicon On Insulator) substrate as a base material, for example. The vibration-driven energy harvester 10 is an electrostatic type power generation element, and can be used in a technique (energy harvesting) for obtaining electric power by collecting vibration energy in an environment.

The support frame (base) 11 has an electrode 16a, an electrode 16b, an electrode 16c, and an electrode 16d. It can be said that the electrodes 16a to 16d are electrodes fixed and held with respect to the support frame 11. The electrode 16a and the electrode 16c are arranged side by side in the up-down direction of the paper surface (Y-axis direction) with a part of the movable portion 12 interposed therebetween. Further, the electrode 16b and the electrode 16d are arranged side by side in the Y-axis direction with the other part of the movable portion 12 interposed therebetween. In the following description, the electrode 16a, the electrode 16b, the electrode 16c, and the electrode 16d, which are fixed, are respectively referred to as a first fixed electrode 16a, a second fixed electrode 16b, a third fixed electrode 16c, and a fourth fixed electrode 16d. It is to be noted that as shown in the coordinate axes of FIG 1, the right direction of the paper surface orthogonal to the Y axis is defined as the X axis plus direction. In other figures, the coordinate axes are displayed so that the orientation of each figure can be understood with reference to the coordinate axes of FIG. 1.

The movable portion 12 has an electrode 13 and a holding portion 18, and the electrode 13 (hereinafter, referred to as a movable electrode) is, in the support frame 11, configured to be movable in the left-right direction (X-axis direction) of the paper surface. A part of the movable electrode 13 is provided between the first fixed electrode 16a and the second fixed electrode 16b so as to face each of the first fixed electrode 16a and the second fixed electrode 16b. Further, another part of the movable electrode 13 is provided between the third fixed electrode 16c and the fourth fixed electrode 16d so as to face each of the third fixed electrode 16c and the fourth fixed electrode 16d.

The first fixed electrode 16a, the second fixed electrode 16b, the third fixed electrode 16c, the fourth fixed electrode 16d, and the movable electrode 13 each have a comb-shaped portion (comb tooth portion), which are as comb-shaped electrodes. The comb tooth portion 17a of the first fixed electrode 16a, the comb tooth portion 17b of the second fixed electrode 16b, the comb tooth portion 17c of the third fixed electrode 16c, and the comb tooth portion 17d of the fourth fixed electrode 16d are formed so as to respectively mesh with the comb tooth portion 14a, the comb tooth portion 14b, the comb tooth portion 14c, and the comb tooth portion 14d of the movable electrodes 13. It is to be noted, the number and arrangement of comb teeth provided on the first fixed electrode 16a, the second fixed electrode 16b, the third fixed electrode 16c, the fourth fixed electrode 16d, and the movable electrode 13 are not limited to the illustrated example.

Of the movable electrodes 13, electret is formed by the charging processing described later, on the surfaces of the surface opposing to the first fixed electrode 16a, the surface opposing to the second fixed electrode 16b, the surface opposing to the third fixed electrode 16c, and the surface opposing to the fourth fixed electrode 16d. At between the movable electrode 13 and the first fixed electrode 16a, between the movable electrode 13 and the second fixed electrode 16b, between the movable electrode 13 and the third fixed electrode 16c, and between the movable electrode 13 and the fourth fixed electrode 16d, capacitor (capacitance) is formed each between them. It is to be noted, electret may be provided on the first fixed electrode 16a to the fourth fixed electrode 16d.

The holding portion 18 is configured to have elasticity and holds (supports) the movable electrode 13 of the movable portion 12. The holding portion 18 is formed to have flexibility using the same material (for example, silicon) as the first fixed electrode 16a to the fourth fixed electrode 16d and the movable electrode 13, for example. One end of the holding portion 18 is connected to the support frame (support portion) 11. The movable portion 12 is the state in elastically supported by the holding portion 18 and can move (vibrate) in the X-axis direction.

It is to be noted, upon actually using, the vibration-driven energy harvester 10 is connected to, as an external circuit, for example, an electric circuit (electrical component) that operates by being supplied with electric power from the vibration-driven energy harvester 10. Such electric circuit is a circuit (power supply circuit) including a conversion unit that converts alternating current generated by the vibration-driven energy harvester 10 into direct current and a power storage unit such as a capacitor or a battery. The electric circuit is used in combination with the vibration-driven energy harvester 10 upon actually using and operates as a load in actual use.

Upon applying vibration to the vibration-driven energy harvester 10 from outside, bending (elastic deformation) occurs in the holding portion 18, the movable portion 12 vibrates in the X-axis direction, and the movable electrode 13 is displaced. Being changed of the position of the movable electrode 13 causes that each distance between the movable electrode 13 and the first fixed electrode 16a to the fourth fixed electrode 16d changes, and the area where mutually opposes increases or decreases in each of the comb tooth portions of these electrodes. For example, the area of the region in the comb tooth portion 14a of the movable electrode 13 opposing the comb tooth portion 17a of the first fixed electrode 16a changes. In response to the change in these areas, the (magnitude of) capacitance between the electrodes changes, and the amount of electrical charge induced each in the first fixed electrode 16a to the fourth fixed electrode 16d by the electric field of the electret of the movable electrode 13 changes.

Upon applying vibration to the vibration-driven energy harvester 10, the capacitance between the movable electrode 13 and the first fixed electrode 16a changes, and the capacitance between the movable electrode 13 and the second fixed electrode 16b also changes. Changing of the capacitance between the movable electrode 13 and the first fixed electrode 16a causes that an alternating current flows between the movable electrode 13 and the first fixed electrode 16a via the external circuit described above, and power generation is performed. Further, changing of the capacitance between the movable electrode 13 and the second fixed electrode 16b causes that an alternating current flows between the movable electrode 13 and the second fixed electrode 16b via the external circuit, and power generation is performed.

In the present embodiment, in a case vibration is applied to the vibration-driven energy harvester 10, the capacitances between the movable electrode 13 and the third fixed electrode 16c changes, and between the movable electrode 13 and the fourth fixed electrode 16d also changes. Changing of the capacitance between the movable electrode 13 and the third fixed electrode 16c causes that an alternating current flows between the movable electrode 13 and the third fixed electrode 16c via the external circuit, and power generation is performed. Further, changing of the capacitance between the movable electrode 13 and the fourth fixed electrode 16d causes that an alternating current flows between the movable electrode 13 and the fourth fixed electrode 16d via the external circuit, and power generation is performed. Then, AC voltage is supplied from the vibration-driven energy harvester 10 to the external circuit.

As described above, in the vibration-driven energy harvester 10 according to the present embodiment, AC power can be generated by utilizing the change in capacitance caused by the vibration. In the vibration-driven energy harvester 10, the amount of power generation can be increased by generating power both of between the movable electrode 13 and the first fixed electrode 16a and between the movable electrode 13 and the second fixed electrode 16b. Further, in the vibration-driven energy harvester 10, the amount of power generation can be further increased by generating power both of between the movable electrode 13 and the third fixed electrode 16c and between the movable electrode 13 and the fourth fixed electrode 16d. That is, it is possible to efficiently convert vibration energy into electrical energy, and it is possible to improve power generation efficiency.

Next, an example of the charging processing of the vibration-driven energy harvester 10 will be described. After forming an oxide film containing ions at the surfaces of each of the comb tooth portions 14a to 14d of the movable electrode 13, a processing of applying a voltage (bias voltage) to the movable electrode 13 is performed while heating the vibration-driven energy harvester 10. Such processing is called BT treatment (Bias-Temperature Treatment). By applying a voltage between the movable electrode 13 and the fixed electrode in a state that the substrate of the vibration-driven energy harvester 10 is in high temperature, ions move in the oxide film of the comb tooth portions 14a to 14d. After that, the heating and the supply of voltage are stopped. The oxide film of each of the comb tooth portions 14a to 14d of the movable electrode 13 becomes to be in a state of having fixed charge and becomes an electret film (layer). The movable electrode 13 becomes an electretized electrode and is electrical charged semi-permanently. In the present embodiment, the processing of electrical charging the electrodes in this way is performed in a wafer state in which before being cut into individual substrates (element substrates). The element substrate is a substrate (chip) for each vibration-driven energy harvester 10, and as already described in reference to FIG 1, the fixed electrode, the movable electrode and the like are to be provided on. The end portion 10a shown in FIG 1 represents an end portion of the element substrate. The element substrate can also be said to be an individual substrate portion cut out from the wafer.

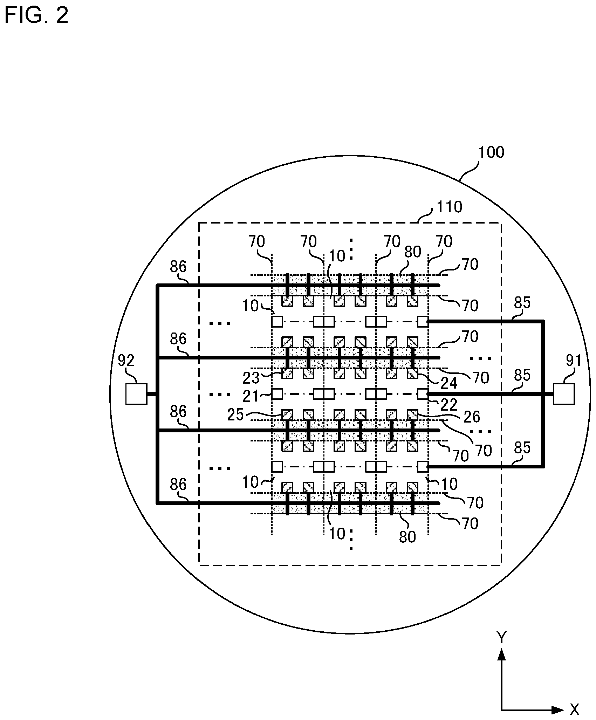

FIG 2 is a plan view showing an example of a wafer on which the power generation element according to the first embodiment is formed. The wafer (substrate) 100 is configured by using, for example, a semiconductor substrate such as a silicon substrate or an SOI substrate, or the one which a plurality of substrates are laminated (for example, the one which a silicon substrate and a glass substrate are bonded together). The wafer 100 has a region 110 in which a plurality of vibration-driven energy harvesters 10 are arranged in the X-axis direction and the Y-axis direction. The dotted lines 70 shown in FIG 2 schematically represent scribe lines provided at the wafer 100. It is to be noted, also in other figures, the scribe line 70 is also shown by the dotted line.

In the present embodiment, in the wafer 100, electrodes 91 and 92 are provided around the region 110 at which the plurality of vibration-driven energy harvesters 10 are formed. The electrode 91 and the electrode 92 are, for example, pads (terminals) configured by using a metal material. Wirings 85 and 86 shown in FIG 2 show a wiring pattern routed on the wafer 100. The electrode 91 is connected to the movable electrode 13 of each vibration-driven energy harvester 10 in the wafer 100 via the wiring 85 described later.

Further, the wafer 100, in the region 110, has a region 80 in which wirings are provided other than the region where the vibration-driven energy harvesters 10 are formed. The region 80 is provided near the vibration-driven energy harvester 10 and is used in a case for performing the BT treatment. Since the region 80 is an unnecessary region for actual use, it is cut away from the vibration-driven energy harvester 10 upon cutting out the vibration-driven energy harvester 10 from the wafer 100 along the scribe lines 70 after the BT treatment. Hereinafter, the region 80 is referred to as a temporary wiring portion 80. In the example shown in FIG 2, the temporary wiring portion 80 and the vibration-driven energy harvester 10 are adjacent to each other in the Y-axis direction with the scribing line 70 therebetween, and it can be also said that the temporary wiring portion 80 is provided for each vibration-driven energy harvester 10.

As shown in FIG 2, the temporary wiring portion 80 is provided with the wiring 86. As will be described later, the wiring 86 is connected to the fixed electrodes of each vibration-driven energy harvester 10 in the wafer 100. The wiring 86 is led out to the electrode 92 provided near the region 110. In the example shown in FIG 2, the wiring 86 extends in the X-axis direction inside the region 110, is wired in the Y-axis direction outside the region 110, and is connected to the electrode 92.

As shown in FIG 1, the vibration-driven energy harvester 10 has connecting portions 21 to 26. The connecting portion 21 is electrically connected to the movable electrode 13 and is provided toward the end portion 10a of the element substrate of the vibration-driven energy harvester 10. The connecting portion 21 includes a first portion 21a connected to the movable electrode 13, and a second portion 21b extending from the first portion 21a, toward the end portion 10a of the element substrate. In the example shown in FIG 1, the connecting portion 21 is located on the left side of the movable electrode 13. The second portion 21b extends leftward from the first portion 21a to the outer peripheral portion (edge portion) of the element substrate of the vibration-driven energy harvester 10. It can be also said that the second portion 21b extends leftward from the first portion 21a to the end portion (outer peripheral portion) of the support frame 11.

The connecting portion 22 is electrically connected to the movable electrode 13 and is provided toward the end portion 10a of the element substrate of the vibration-driven energy harvester 10. The connecting portion 22 includes a first portion 22a connected to the movable electrode 13, and a second portion 22b extending from the first portion 22a, toward the end portion 10a of the element substrate. In the example shown in FIG 1, the connecting portion 22 is located on the right side of the movable electrode 13. The second portion 22b extends rightward from the first portion 22a to the outer peripheral portion of the element substrate. It can be also said that the second portion 22b extends rightward from the first portion 22a to the end portion of the support frame 11.

The connecting portion 23 is electrically connected to the first fixed electrode 16a and is provided toward the end portion 10a of the element substrate of the vibration-driven energy harvester 10. The connecting portion 23 includes a first portion 23a connected to the first fixed electrode 16a and a second portion 23b extending from the first portion 23a toward the end portion 10a of the element substrate. In the example shown in FIG 1, the second portion 23b extends upward from the first portion 23a to the outer peripheral portion of the element substrate. It can be also said that the second portion 23b extends upward from the first portion 23a to the end portion of the support frame 11.

The connecting portion 24 is electrically connected to the second fixed electrode 16b and is provided toward the end portion 10a of the element substrate of the vibration-driven energy harvester 10. The connecting portion 24 includes a first portion 24a connected to the second fixed electrode 16b and a second portion 24b extending from the first portion 24a toward the end portion 10a of the element substrate. In the example shown in FIG 1, the second portion 24b extends upward from the first portion 24a to the outer peripheral portion of the element substrate. It can be also said that the second portion 24b extends upward from the first portion 24a to the end of the support frame 11.

The connecting portion 25 is electrically connected to the third fixed electrode 16c and is provided toward the end portion 10a of the element substrate of the vibration-driven energy harvester 10. The connecting portion 25 includes a first portion 25a connected to the third fixed electrode 16c and a second portion 25b extending from the first portion 25a toward the end portion 10a of the element substrate. In the example shown in FIG 1, the second portion 25b extends downward from the first portion 25a to the outer peripheral portion of the element substrate. It can be also said that the second portion 25b extends downward from the first portion 25a to the end of the support frame 11.

The connecting portion 26 is electrically connected to the fourth fixed electrode 16d and is provided toward the end portion 10a of the element substrate of the vibration-driven energy harvester 10. The connecting portion 26 includes a first portion 26a connected to the fourth fixed electrode 16d and a second portion 26b extending from the first portion 26a toward the end portion 10a of the element substrate. In the example shown in FIG 1, the second portion 26b extends downward from the first portion 26a to the outer peripheral portion of the element substrate. It can be also said that the second portion 26b extends downward from the first portion 26a to the end portion of the support frame 11.

Each the first portions 21a to 26a is a pad (electrode) formed of, for example, a metal material. The first portions 21a to 26a are portions to which the wires are connected in the bonding process in a case the vibration-driven energy harvester 10 is to be mounted on the package. It is to be noted that the first portion 21a and the first portion 22a are both portions to be connected to the movable electrode 13, and are electrically connected with each other in the vibration-driven energy harvester 10. Therefore, in the bonding process, the wire may be connected to either the first portion 21a or the first portion 22a. In such case, the wires are connected to five pads in total of one of the first portion 21a and the first portion 22a, and to the first portions 23a to 26a.

The second portions 21b to 26b are wirings configured by using the same material (for example, silicon) as the movable electrode 13 and the first fixed electrode 16a to the fourth fixed electrode 16d, respectively. The second portions 23b to 26b extend to the outside of the vibration-driven energy harvester 10 and are connected to the wiring 86 of the temporary wiring portion 80 shown in FIG 2. The wiring 86 is also configured by using the same material as the movable electrode 13 and the first fixed electrode 16a to the fourth fixed electrode 16d. It can be also said that the second portions 23b to 26b are a part of the wiring 86. It is to be noted that the second portions 21b to 26b and the wiring 86 may be configured by using another material (for example, a metal material). Further, the wiring 85 shown in FIG 2 may also be configured by using the same material as the movable electrode 13 and the first fixed electrode 16a to the fourth fixed electrode 16d, or may be configured by using another material (for example, a metal material).

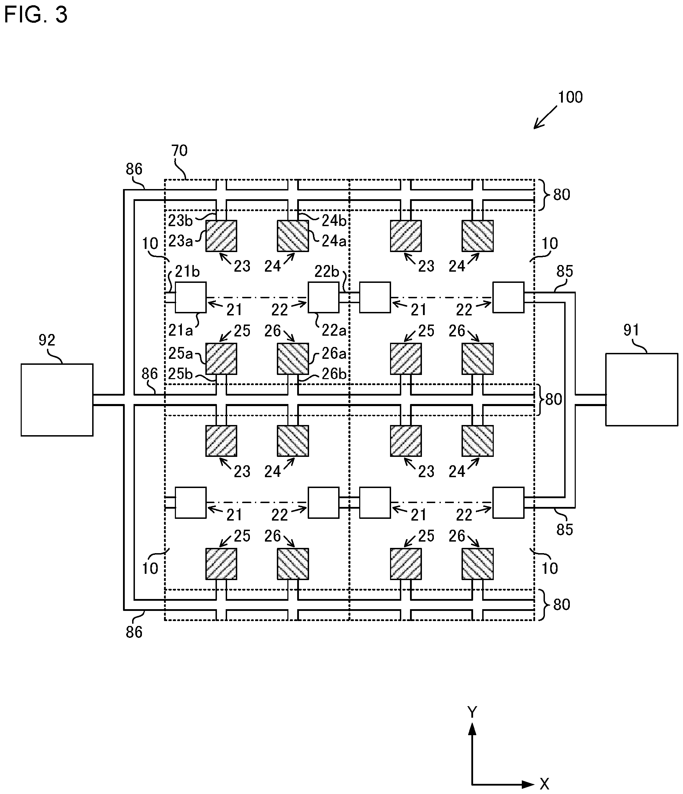

FIG 3 is a view showing a configuration example of a part of the wafer on which the power generation element according to the first embodiment is formed. FIG 3 schematically shows the connection relationship of, the plurality of vibration-driven energy harvesters 10 provided on the wafer 100, the temporary wiring portion 80, and the electrodes 91 and 92. It is to be noted that FIG 3 illustrates only a part of the plurality of the vibration-driven energy harvesters 10 provided on the wafer 100.

The second portion 22b of the vibration-driven energy harvester 10 is connected to the second portion 21b of another vibration-driven energy harvester 10 located to the right of this vibration-driven energy harvester 10. The second portion 22b of the rightmost vibration-driven energy harvester 10 among the plurality of vibration-driven energy harvesters 10 is connected to the electrode 91 via the wiring 85. In the vibration-driven energy harvester 10, the second portion 21b and the second portion 22b are electrically connected with each other as described above. Therefore, the electrode 91 is electrically connected with each movable electrode 13 of each vibration-driven energy harvester 10 provided on the wafer 100.

The second portion 23b and the second portion 24b of the vibration-driven energy harvester 10 are connected, via the wiring 86 of the temporary wiring portion 80, with the second portions 23b and the second portions 24b of other vibration-driven energy harvesters 10, Further, the second portion 23b and the second portion 24b of the vibration-driven energy harvester 10 are connected, via the wiring 86 of the temporary wiring portion 80, with the second portions 25b and the second portions 26b of other vibration-driven energy harvesters 10. The second portion 23b and the second portion 24b of the vibration-driven energy harvester 10 are connected also with the second portion 25b and the second portion 26b of this vibration-driven energy harvester 10 via the wiring 86 of the temporary wiring portion 80. Further, as shown in FIG 2, in the outside the region 110 where the vibration-driven energy harvesters 10 are formed, the wiring 86 of the temporary wiring portion 80 is connected to the electrode 92. Thereby, the electrode 92 is electrically connected to the first fixed electrode 16a to the fourth fixed electrode 16d of each vibration-driven energy harvester 10 provided on the wafer 100 via the electrode 86 of the temporary wiring portion 80.

In the present embodiment, the electrode 91 is electrically connected to the movable electrode 13 of each vibration-driven energy harvester 10, and the electrode 92 is electrically connected to the first fixed electrode 16a to the fourth fixed electrode 16d of each vibration-driven energy harvester 10. By contacting the probes (needles) respectively to the electrode 91 and the electrode 92 and applying a voltage between the electrode 91 and the electrode 92, the voltage can be applied between the movable electrode and the fixed electrode of each vibration-driven energy harvester 10. This makes it possible to perform BT treatment in the wafer state to form an electret on each of the vibration-driven energy harvester 10.

In a case the BT treatment is performed in the wafer state, it is conceivable that the relative position between the probe and the pad (pad for probe) on which the probe is contacted may shift due to the temperature change of the wafer. In the BT treatment, since the temperature of the wafer is raised to high temperature, it is conceivable a deformation may occur due to thermal expansion of the wafer. Therefore, in order to align the probe with the pad for probe of the wafer (alignment adjustment), it is necessary to increase the area of the pad for probe. In order to ensure that the probe and the pad for probe to come into contact with each other, it is necessary to increase the size of the pad for probe sufficiently. In a case such pad for probe is arranged in the vibration-driven energy harvester, the chip area of the vibration-driven energy harvester increases, which may increase the manufacturing cost.

Therefore, in the present embodiment, as shown in FIG 2 and FIG 3, the electrode 91 and the electrode 92 are provided on the outer peripheral portion outside the region 110 where the vibration-driven energy harvester 10 is formed. By using the electrodes 91 and 92 as probe pads for performing BT processing, it is not necessary to provide a large-sized pad as a probe pad for each vibration-driven energy harvester 10. Therefore, it is possible to prevent the area of the vibration-driven energy harvester 10 from increasing, and it is possible to increase the number of chips manufactured per wafer. Further, the area of the pads (the first portions 21a to 26a) in the vibration-driven energy harvester 10 can be reduced, and the chip area of the vibration-driven energy harvester 10 can be reduced. It is possible to suppress an increase in manufacturing cost.

In the present embodiment, the electrode 91 and the electrode 92 are electrodes common to the plurality of vibration-driven energy harvesters 10. Therefore, by using the electrode 91, the electrode 92, and the temporary wiring portion 80, it is possible to simultaneously perform the BT treatment to the plurality of vibration-driven energy harvesters 10 provided on the wafer 100. Therefore, compared with the case where the vibration-driven energy harvesters 10 in the chip state are subjected BT treatment one by one, the BT treatment can be efficiently performed in a short time. After the BT treatment is performed, the temporary wiring portion 80 is separated from (the connecting portions 23 to 26 of) the vibration-driven energy harvester 10 as described above. Thereby, the capacitance (stray capacitance) added to the connecting portions 23 to 26 can be reduced. As a result, the reactive power in the vibration-driven energy harvester 10 and the external circuit can be reduced, and the power generation efficiency can be improved.

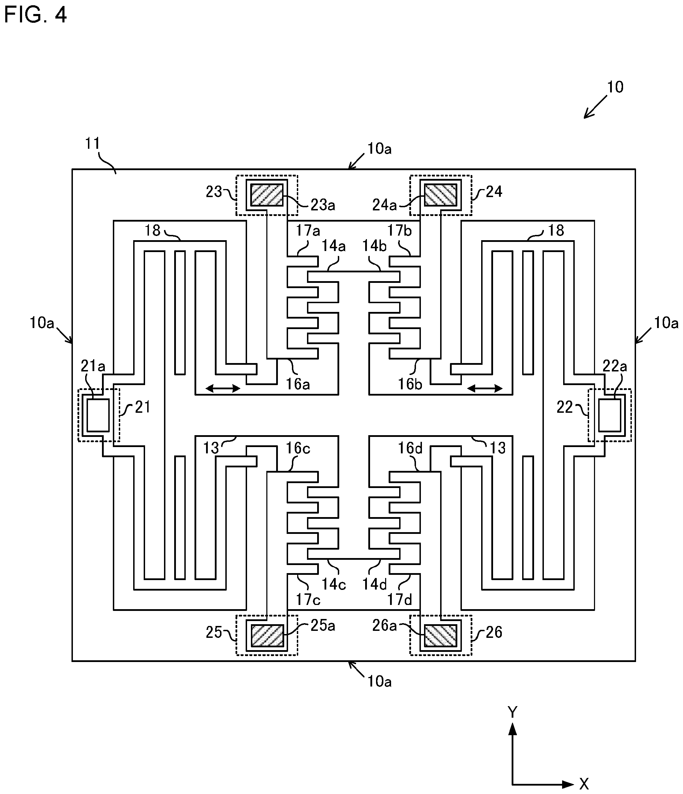

It is to be noted that the second portions 21b to 26b described above function as a part of a wiring path for supplying a voltage from the electrode 91 and the electrode 92 to the vibration-driven energy harvester 10. As shown in FIG 4, after the BT treatment is performed, the second portions 21b to 26b may be removed from the vibration-driven energy harvester 10. In this case, the second portions 21b to 26b may be removed by wet etching or by laser light irradiation. Further, the second portions 21b to 26b may be separated from the vibration-driven energy harvester 10 at the stage of dicing.

Next, an example of a manufacturing method of the vibration-driven energy harvester 10 according to the first embodiment will be described. First, as the substrate (wafer) 100, an SOI substrate having a device layer of an upper layer, a BOX layer of an intermediate layer, and a handle layer of a lower layer is prepared. For example, the device layer and the handle layer are configured by using silicon, and the BOX layer is configured by using silicon oxide film.

At the device layer of the substrate 100, forming of, the first fixed electrode 16a to the fourth fixed electrode 16d, the movable portion 12 having the movable electrode 13 and the holding portion 18, the second portions 21b to 26b of the connecting portions 21 to 26, and the wirings 85 and 86, is performed. Further, forming, on the substrate 100, of the first portions 21a to 26a of the connecting portions 21 to 26 and the electrodes 91 and 92 is performed. It is to be noted, forming of the support frame 11 is performed on the handle layer of the substrate 100.

Next, forming of an oxide film containing ions (for example, alkaline ions such as potassium (K)) is performed on the surfaces of the comb tooth portions 14a to 14d of the movable electrode 13 by a wet oxidation treatment. Then, the BT treatment in which the substrate 100 is heated, and in that state, the probes are contacted to the electrodes 91 and 92 to energize them, is performed.

In the BT treatment, the temperature of the entire substrate 100 becomes high, and the ions in the oxide film formed on the comb tooth portions 14a to 14d of the movable electrode 13 are easier to move. In this state, upon applying a voltage between the first fixed electrode 16a to the fourth fixed electrode 16d and the movable electrode 13, the movement of ions in the oxide film occurs. After that, the heating of the substrate 100 is stopped, and the supply of voltage to the electrodes 91 and 92 is stopped. By performing the BT treatment in this way, the ions in the oxide film move, and an electret film is formed at the comb tooth portions 14a to 14d of the movable electrode 13.

Next, a dicing process is performed in which the substrate 100 is cut at the scribe lines 70 (see FIG 2 and the like) and separated into each chip (element substrate). In this case, it is divided into individual chips so as not to leave the temporary wiring portion 80 in the chip. It is to be noted that the second portions 21b to 26b in the chip may be removed by etching or laser light irradiation. It is to be noted, the second portions 21b to 26b may be removed before the dicing process described above. The vibration-driven energy harvester 10 shown in FIG 1 or FIG 4 can be manufactured by the manufacturing method as described above.

According to the above-described embodiment, following effects can be obtained.
(1) A manufacturing method of a power generation element is a manufacturing method of a power generation element that performs power generation by vibration, and includes: preparing the substrate 100; forming on the substrate a plurality of the power generation elements 10 each including the first electrode (for example, the first fixed electrode 16a) and the movable portion 12 that has the second electrode (the movable electrode 13) opposing to the first electrode; and forming on the substrate a first connecting portion by which the first electrodes of the plurality of power generation elements are electrically and mutually connected with one another and a second connecting portion by which the second electrodes of the plurality of power generation elements are electrically and mutually connected with one another. In the present embodiment, the movable electrodes 13 of each of the power generation elements 10 provided on the substrate 100 are connected mutually via the connecting portions 21, 22 and the wiring 85. Further, the first fixed electrodes 16a of each of the power generation elements 10 are connected mutually via the connecting portion 23 and the wiring 86. Therefore, it is possible to supply a voltage between the movable electrode and the fixed electrode of each power generation element 10 from the pad for probe provided outside the power generation element 10. It is not necessary to secure a region for arranging a large pad as the pad for probe in the power generation element 10, and it is possible to suppress an increase in the area of the power generation element 10. This makes it possible to increase the number of power generation elements 10 that can be manufactured per one wafer.
(2) The power generation element 10 is the power generation element that performs power generation by vibration, and includes: the element substrate provided with the first electrode (for example, the first fixed electrode 16a) and the movable portion 12 that has the second electrode (the movable electrode 13) opposing to the first electrode; the first connecting portion (the connecting portion 23) connected to the first electrode and provided up to an end portion of the element substrate; and the second connecting portion (the connecting portions 21, 22) connected to the movable portion and provided up to the end portion of the element substrate. With such a configuration, in the present embodiment, it is possible to supply a voltage between the movable electrode and the fixed electrode from the pad for probe provided outside the power generation element 10 via the connecting portions 21 to 23. It is possible to avoid an increase in the area of the power generation element 10 due to the arrangement of a large pad as the pad for probe in the power generation element 10, and it is possible to increase the number of power generation elements 10 being manufactured per one wafer.
(3) In the present embodiment, the BT treatment is performed in the wafer state using the connecting portions 21 to 23 to form an electret film in each power generation element 10 of the wafer 100. Therefore, it is possible to suppress an increase in manufacturing cost.

Hereinafter, the power generation element according to variations will be described with reference to the drawings. In the figures, the same or corresponding parts as those of the first embodiment are designated by the same reference signs, and the differences from the power generation element according to the first embodiment will be mainly described.

### Variation 1

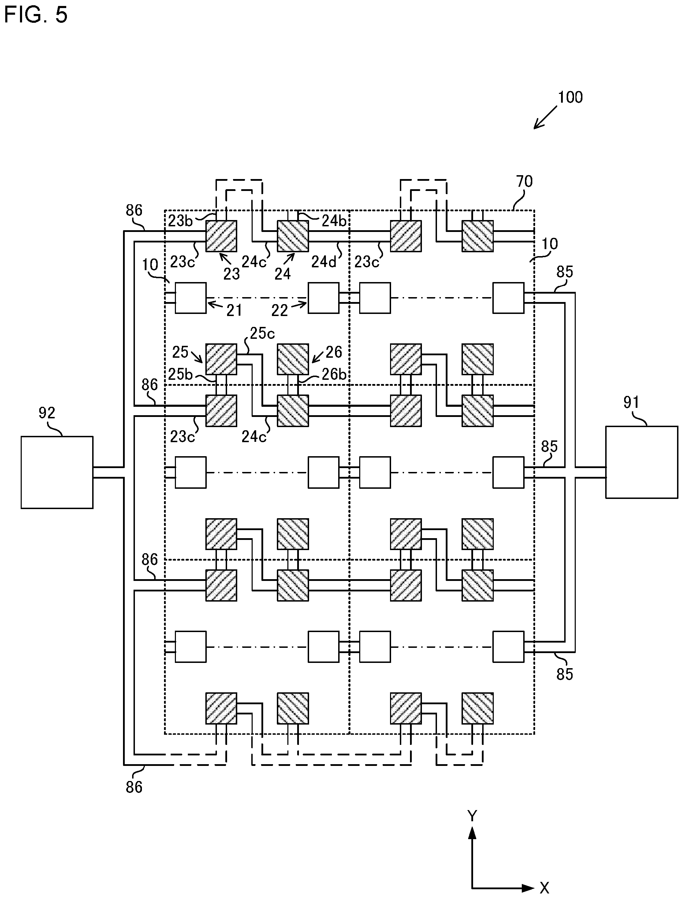

FIG 5 is a view showing a configuration example of a part of the wafer on which a power generation element according to the variation 1 is formed. A connecting portion 23 has a third portion 23c extending leftward from the first portion 23a toward the end portion of an element substrate. A connecting portion 24 has a third portion 24c extending leftward from a first portion 24a and then extending upward toward the end portion of the element substrate, and a fourth portion 24d extending rightward from the first portion 24a toward the end portion of the element substrate. A connecting portion 25 has a third portion 25c extending rightward from a first portion 25a and then extending downward toward the end portion of the element substrate.

The third portion 23c of the vibration-driven energy harvester 10 is connected to the fourth portion 24d of another vibration-driven energy harvester 10 located to the left of this vibration-driven energy harvester 10. The third portion 24c of the vibration-driven energy harvester 10 is connected to the third portion 25c of another vibration-driven energy harvester 10 located above this vibration-driven energy harvester 10. The third portion 23c of each vibration-driven energy harvester 10 of the left end among the plurality of vibration-driven energy harvesters 10 is electrically connected to the electrode 92 via a wiring 86.

The second portion 23b of the vibration-driven energy harvester 10 is connected to the second portion 25b of another vibration-driven energy harvester 10 located above this vibration-driven energy harvester 10. The second portion 24b of the vibration-driven energy harvester 10 is connected to a second portion 26b of another vibration-driven energy harvester 10 located above this vibration-driven energy harvester 10. An electrode 92 is electrically connected with a first fixed electrode 16a to a fourth fixed electrode 16d of each vibration-driven energy harvester 10 provided on a wafer 100.

In the present variation, by using electrodes 91 and 92, the BT treatment to the plurality of vibration-driven energy harvesters 10 provided on the wafer 100 can be performed in parallel. In the present variation, since a temporary wiring portion 80 is not arranged on the wafer 100, it is possible to increase the number of vibration-driven energy harvesters 10 manufactured from one wafer 100.

### Variation 2

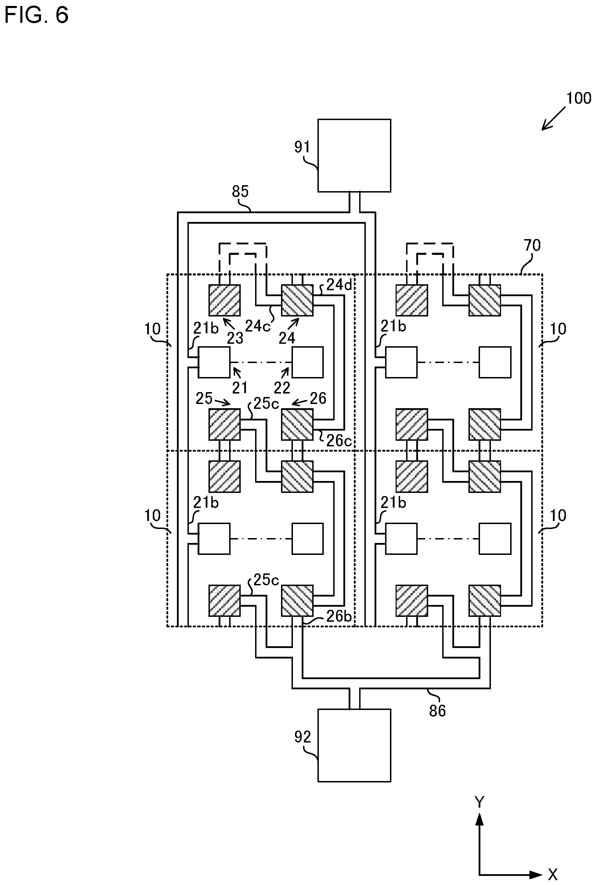

FIG 6 is a view showing a configuration example of a part of the wafer on which a power generation element according to the variation 2 is formed. A connecting portion 21 has a second portion 21b extending in the up-down direction from a first portion 21a toward each end portion of an element substrate. A connecting portion 24 has a fourth portion 24d extending rightward from a first portion 24a and then extending toward a connecting portion 26. The connecting portion 26 has a third portion 26c extending rightward from the first portion 26a and then extending toward the connecting portion 24.

In the vibration-driven energy harvester 10, the fourth portion 24d and the third portion 26c are connected with each other. The third portion 25c and the second portion 26b of each vibration-driven energy harvester 10 at the lower end among the plurality of vibration-driven energy harvesters 10 are respectively electrically connected to an electrode 92 via a wiring 86. The electrode 92 is electrically connected with a first fixed electrode 16a to a fourth fixed electrode 16d of each vibration-driven energy harvester 10 provided on a wafer 100.

The second portion 21b of the vibration-driven energy harvester 10 is connected to the second portion 21b of another vibration-driven energy harvester 10 located above this vibration-driven energy harvester 10. The second portion 21b of each vibration-driven energy harvester 10 at the upper end among the plurality of vibration-driven energy harvesters 10 is connected to an electrode 91 via a wiring 85. The electrode 91 is electrically connected to each movable electrode 13 of each vibration-driven energy harvester 10 provided on the wafer 100.

In the present variation as well, the same effect as that of the variation 1 can be obtained. Further, as described above, since the fourth portion 24d and the third portion 26c are electrically connected with each other in the vibration-driven energy harvester 10, in the bonding step, the wire may be connected to only one of the first portion 24a and the first portion 26a. Thereby, the time and cost required for bonding can be reduced.

### Variation 3

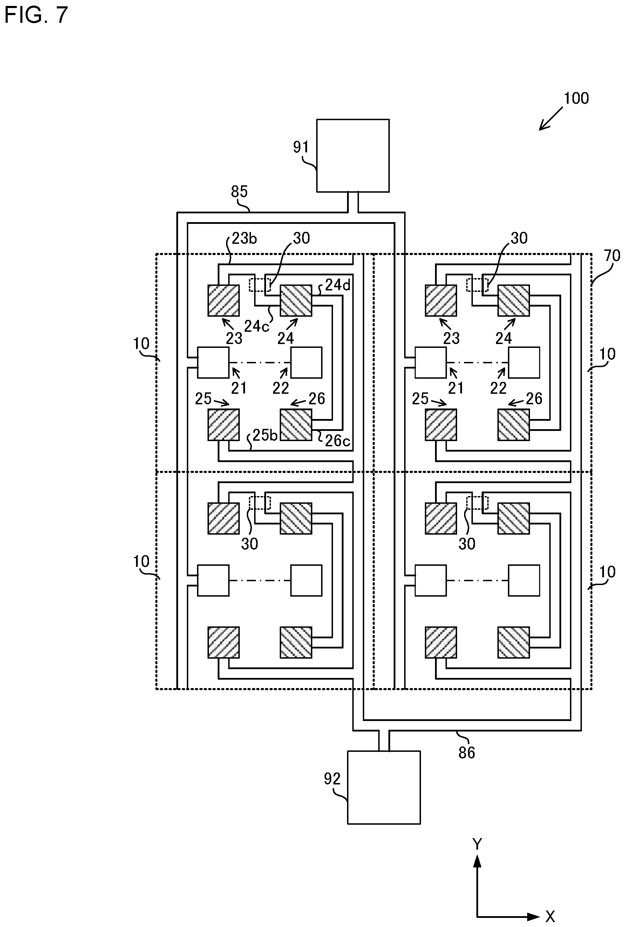

FIG 7 is a view showing a configuration example of a part of the wafer on which a power generation element according to the variation 3 is formed. In the present variation, a second portion 23b, a third portion 24c, a second portion 25b, and a third portion 26c are electrically connected with each other in the vibration-driven energy harvester 10. The second portion 23b, the third portion 24c, and the second portion 25b of each vibration-driven energy harvester 10 at the lower end among the plurality of vibration-driven energy harvesters 10 are connected to an electrode 92 via a wiring 86. The electrode 92 is electrically connected with a first fixed electrode 16a to a fourth fixed electrode 16d of each vibration-driven energy harvester 10 provided on a wafer 100.

Also in the present variation, by using electrodes 91 and 92, the BT treatment to each vibration-driven energy harvester 10 provided on the wafer 100 can be performed. It is to be noted, in order to electrically disconnect the second portion 23b of the connecting portion 23 and the third portion 24c of the connecting portion 24 after the BT treatment is performed, for example, the wiring portion at the regions 30 shown by the dotted line in FIG 7 are removed. In the vibration-driven energy harvester 10 after the BT treatment, the fourth portion 24d and the third portion 26c are electrically connected with each other, and the second portion 23b and the second portion 25b are electrically connected with each other. Therefore, in the bonding step, the wires can be connected to either one of the first portion 24a and the first portion 26a, and to either one of the first portion 23a and the first portion 25a. As a result, the time and cost required for bonding can be reduced.

### Variation 4

In the above-described embodiment and variations, an example in which the vibration-driven energy harvester 10 has the first fixed electrode 16a to the fourth fixed electrode 16d has been described. However, the vibration-driven energy harvester 10 may have a configuration that does not have the third fixed electrode 16c and the fourth fixed electrode 16d, or a configuration that does not have the first fixed electrode 16a and the second fixed electrode 16b.

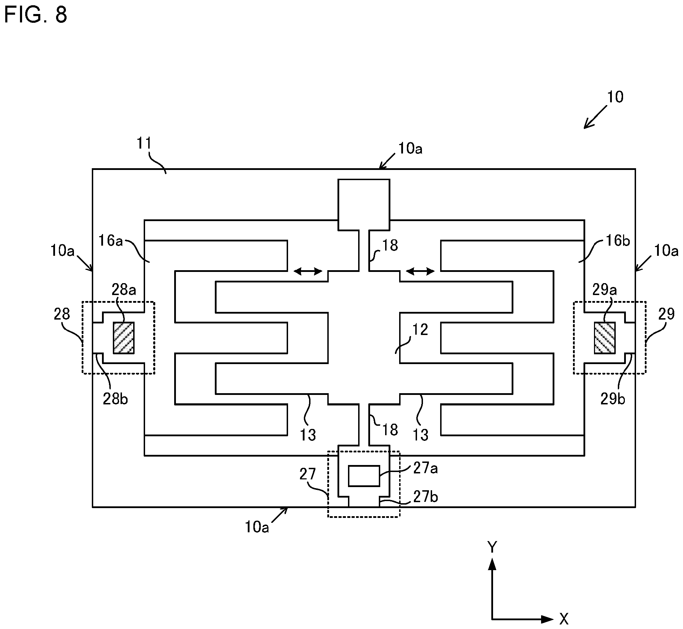

FIG 8 is a view showing a configuration example of a power generation element according to the variation 4. In the example shown in FIG 8, a vibration-driven energy harvester 10 includes a movable portion 12 having a movable electrode 13 and a holding portion 18, and a support portion 11 having a first fixed electrode 16a and a second fixed electrode 16b. A connecting portion 27 includes a first portion 27a that is electrically connected to the movable electrode 13 and a second portion 27b that extends downward from the first portion 27a, toward the end portion 10a of an element substrate. A connecting portion 28 includes a first portion 28a connected to the first fixed electrode 16a and a second portion 28b extending leftward from the first portion 28a toward the end portion 10a of the element substrate. A connecting portion 29 includes a first portion 29a connected to the second fixed electrode 16b and a second portion 29b extending rightward from the first portion 29a, toward the end portion 10a of the element substrate.

### Variation 5

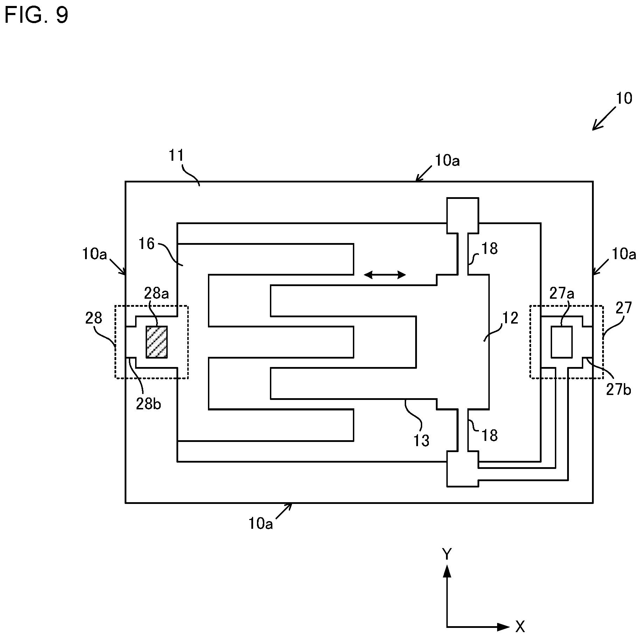

A vibration-driven energy harvester 10 may have a configuration having one movable electrode and one fixed electrode. FIG 9 is a view showing a configuration example of the power generation element according to the variation 5. In the example shown in FIG 9, a vibration-driven energy harvester 10 includes a movable portion 12 having a movable electrode 13 and a holding portion 18, and a support portion 11 having a fixed electrode 16. A connecting portion 27 includes a first portion 27a that is electrically connected to the movable electrode 13 and a second portion 27b that extends rightward from the first portion 27a, toward the end portion 10a of an element substrate. A connecting portion 28 includes a first portion 28a connected to the fixed electrode 16 and a second portion 28b extending leftward from the first portion 28a toward the end portion 10a of the element substrate.

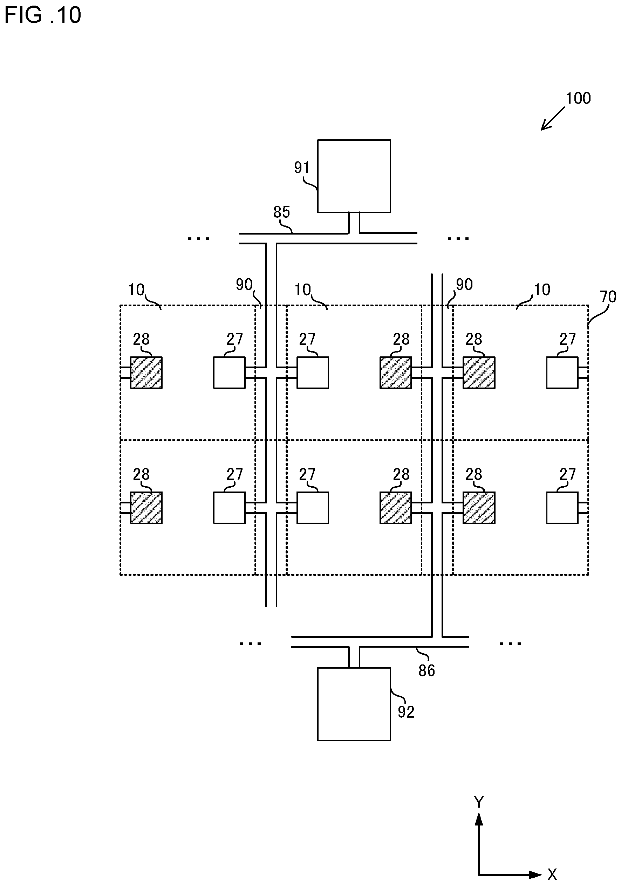

FIG 10 is a view showing a configuration example of a part of the wafer on which the power generation element according to the variation 5 is formed. In the example shown in FIG 10, an electrode 91 is electrically connected, via a wiring 85 of a temporary wiring portion 90, with a connecting portion 27 of each vibration-driven energy harvester 10. Further, an electrode 92 is electrically connected, via a wiring 86 of the temporary wiring portion 90, with a connecting portion 28 of each vibration-driven energy harvester 10. Also in this case, by using the electrodes 91 and 92, the BT treatment to the plurality of vibration-driven energy harvesters 10 provided on a wafer 100 can be performed in parallel. It is to be noted, as in the case of the above-described variations 1 to 3, without providing the temporary wiring portion, the electrode 91 may be electrically connected with the connecting portion 27 of each vibration-driven energy harvester 10 and the electrode 92 may be electrically connected with the connecting portion 28 of each vibration-driven energy harvester 10.

### Variation 6

In the above-described embodiments and variations, an example of applying the present invention to a power generation element has been described, however, the present invention can be applied to other elements and devices. The present invention may be applied to, for example, actuators or sensors.

**REFERENCE SIGNS LIST**

| | | | | | |
|---|---|---|---|---|---|
| 10 | Power Generation Element, | 12 | Movable Portion, | 13 | Movable Electrode, |
| 16a | First Fixed Electrode, | 16b | Second Fixed Electrode, | | |
| 16c | Third Fixed Electrode, | 16d | Fourth Fixed Electrode, | | |
| 21, 22, 23, 24, 25, 26 | Connecting Portion, | | | 100 | Substrate |

## Claims

1. A manufacturing method of a power generation element (10) that performs power generation by vibration, comprising:
preparing a substrate (100);
forming on the substrate (100) a plurality of power generation elements (10) each including a first electrode (16a) and a movable portion (12) that has a movable electrode (13) opposing to the first electrode (16a);
**characterized by**
forming on the substrate (100) a first connecting portion (23 - 26) by which the first electrodes (16a) of the plurality of power generation elements (10) are electrically and mutually connected with one another and a second connecting portion (21, 22) by which the movable electrodes (13) of the plurality of power generation elements (10) are electrically and mutually connected with one another.

2. The manufacturing method of power generation element (10) according to claim 1, further comprising:
heating the substrate (100) and supplying voltage to the first connecting portion (23- 26) and the second connecting portion (21, 22).

3. The manufacturing method of power generation element (10) according to claim 1 or claim 2, wherein:
the power generation element (10) includes a second electrode (16b);
the movable electrode (13) is provided between the first electrode (16a) and the second electrode (16b); and
the first connecting portion (23-26) electrically connects the first electrodes (16a) and the second electrodes (16b) of the plurality of power generation elements (10).

4. The manufacturing method of power generation element (10) according to claim 3, wherein:
the power generation element (10) includes a third electrode (16c) and a fourth electrode (16d) provided, so as to interpose the movable electrode (13) therebetween; and
the first connecting portion (23-26) electrically connects the first electrodes (16a), the second electrodes (16b), the third electrodes (16c), and the fourth electrodes (16d) of the plurality of power generation elements (10).

5. The manufacturing method of power generation element (10) according to any one of claims 1 to 4, further comprising:
cutting out the power generation elements (10) from the substrate (100).

6. The manufacturing method of power generation element (10) according to any one of claims 1 to 5, further comprising:
removing each portion of the first connecting portion (23-26) and the second connecting portion (21, 22) provided up to an end portion of the power generation element (10).

7. A power generation element (10) that performs power generation by vibration, comprising:
an element substrate (100) provided with a first electrode (16a) and a movable portion (12) that has a movable electrode (13) opposing to the first electrode (16a);
**characterized by**
a first connecting portion (23 - 26) connected to the first electrode (16a) and provided up to an end portion of the element substrate (100); and
a second connecting portion (21, 22) connected to the movable portion (12) and provided up to the end portion of the element substrate (100).

8. The power generation element (10) according to claim 7, wherein:
the element substrate (100) includes a second electrode (16b);
the movable electrode (13) is provided between the first electrode (16a) and the second electrode (16b); and
the power generation element (10) further comprises a third connecting portion (24) connected to the second electrode (16b) and provided up to the end portion of the element substrate (100).

9. The power generation element (10) according to claim 8, further comprising:
a third electrode (16c) and a fourth electrode (16d) provided with the movable electrode (13) therebetween;
a fourth connecting portion (25) connected to the third electrode (16c) and provided up to the end portion of the element substrate (100); and
a fifth connecting portion (26) connected to the fourth electrode (16d) and provided up to the end portion of the element substrate (100).

10. The power generation element (10) according to claim 9, wherein:
the third connecting portion (24) and the fourth connecting portion (25) each include a plurality of portions extending in different directions to the end portion of the element substrate (100).

11. The power generation element (10) according to claim 10, wherein:
the second electrode (16b) and the fourth electrode (16d) are connected with each other via the third connecting portion (25) and the fifth connecting portion (26).

12. The power generation element (10) according to claim 11, wherein:
the first electrode (16a) and the third electrode (16c) are connected with each other via the first connecting portion (23) and the fourth connecting portion (25).

## Patentansprüche

1. Verfahren zur Herstellung eines Energieerzeugungselements (10), das Energieerzeugung durch Vibration durchführt, das umfasst:
Vorbereiten eines Substrats (100);
Ausbilden mehrerer Energieerzeugungselemente (10) auf dem Substrat (100), wobei jedes eine erste Elektrode (16a) und einen beweglichen Abschnitt (12) einschließt, der eine bewegliche Elektrode (13) aufweist, die der ersten Elektrode (16a) gegenüberliegt;
**gekennzeichnet durch**
Ausbilden auf dem Substrat (100) eines ersten Verbindungsabschnitts (23-26), durch den die ersten Elektroden (16a) der mehreren Energieerzeugungselemente (10) elektrisch und gegenseitig miteinander verbunden sind, und eines zweiten Verbindungsabschnitts (21, 22), durch den die beweglichen Elektroden (13) der mehreren Energieerzeugungselemente (10) elektrisch und gegenseitig miteinander verbunden sind.

2. Verfahren zur Herstellung eines Energieerzeugungselements (10) nach Anspruch 1, das ferner umfasst:
Erhitzen des Substrats (100) und Anlegen einer Spannung an den ersten Verbindungsabschnitt (23-26) und den zweiten Verbindungsabschnitt (21, 22).

3. Verfahren zur Herstellung eines Energieerzeugungselements (10) nach Anspruch 1 oder Anspruch 2, wobei:
das Energieerzeugungselement (10) eine zweite Elektrode (16b) einschließt;
die bewegliche Elektrode (13) zwischen der ersten Elektrode (16a) und der zweiten Elektrode (16b) bereitgestellt ist; und
der erste Verbindungsabschnitt (23-26) die ersten Elektroden (16a) und die zweiten Elektroden (16b) der mehreren Energieerzeugungselemente (10) elektrisch verbindet.

4. Verfahren zur Herstellung eines Energieerzeugungselements (10) nach Anspruch 3, wobei:
das Energieerzeugungselement (10) eine dritte Elektrode (16c) und eine vierte Elektrode (16d) einschließt, die so bereitgestellt sind, dass die bewegliche Elektrode (13) dazwischen liegt; und
der erste Verbindungsabschnitt (23-26) die ersten Elektroden (16a), die zweiten Elektroden (16b), die dritten Elektroden (16c) und die vierten Elektroden (16d) der mehreren Energieerzeugungselemente (10) elektrisch verbindet.

5. Verfahren zur Herstellung eines Energieerzeugungselements (10) nach einem der Ansprüche 1 bis 4, das ferner umfasst:
Ausschneiden der Energieerzeugungselemente (10) aus dem Substrat (100).

6. Verfahren zur Herstellung eines Energieerzeugungselements (10) nach einem der Ansprüche 1 bis 5, das ferner umfasst:
Entfernen jedes Abschnitts des ersten Verbindungsabschnitts (23-26) und des zweiten Verbindungsabschnitts (21, 22), die bis zu einem Endabschnitt des Energieerzeugungselements (10) bereitgestellt sind.

7. Energieerzeugungselement (10), das Energieerzeugung durch Vibration durchführt, das umfasst:
ein Elementsubstrat (100), das mit einer ersten Elektrode (16a) und einem beweglichen Abschnitt (12) versehen ist, der eine bewegliche Elektrode (13) aufweist, die der ersten Elektrode (16a) gegenüberliegt; **gekennzeichnet durch**
einen ersten Verbindungsabschnitt (23 - 26), der mit der ersten Elektrode (16a) verbunden ist und bis zu einem Endabschnitt des Elementsubstrats (100) bereitgestellt ist; und
einen zweiten Verbindungsabschnitt (21, 22), der mit dem beweglichen Abschnitt (12) verbunden ist und bis zu dem Endabschnitt des Elementsubstrats (100) bereitgestellt ist.

8. Energieerzeugungselement (10) nach Anspruch 7, wobei:
das Elementsubstrat (100) eine zweite Elektrode (16b) einschließt;
die bewegliche Elektrode (13) zwischen der ersten Elektrode (16a) und der zweiten Elektrode (16b) bereitgestellt ist; und
das Energieerzeugungselement (10) ferner einen dritten Verbindungsabschnitt (24) umfasst, der mit der zweiten Elektrode (16b) verbunden ist, und bis zu dem Endabschnitt des Elementsubstrats (100) bereitgestellt ist.

9. Energieerzeugungselement (10) nach Anspruch 8, das ferner umfasst: eine dritte Elektrode (16c) und eine vierte Elektrode (16d), die mit der beweglichen Elektrode (13) dazwischen versehen ist;
einen vierten Verbindungsabschnitt (25), der mit der dritten Elektrode (16c) verbunden ist und bis zu dem Endabschnitt des Elementsubstrats (100) bereitgestellt ist; und
einen fünften Verbindungsabschnitt (26), der mit der vierten Elektrode (16d) verbunden ist und bis zu dem Endabschnitt des Elementsubstrats (100) bereitgestellt ist.

10. Energieerzeugungselement (10) nach Anspruch 9, wobei:
der dritte Verbindungsabschnitt (24) und der vierte Verbindungsabschnitt (25) jeweils mehrere Abschnitte einschließen, die sich in unterschiedlichen Richtungen zum Endabschnitt des Elementsubstrats (100) erstrecken.

11. Energieerzeugungselement (10) nach Anspruch 10, wobei:
die zweite Elektrode (16b) und die vierte Elektrode (16d) miteinander über den dritten Verbindungsabschnitt (25) und den fünften Verbindungsabschnitt (26) verbunden sind.

12. Energieerzeugungselement (10) nach Anspruch 11, wobei:
die erste Elektrode (16a) und die dritte Elektrode (16c) miteinander über den ersten Verbindungsabschnitt (23) und den vierten Verbindungsabschnitt (25) verbunden sind.

## Revendications

1. Procédé de fabrication d'un élément de génération de puissance (10) qui assure une génération de puissance par vibration, comprenant :
la préparation d'un substrat (100) ;
la formation sur le substrat (100) d'une pluralité d'éléments de génération de puissance (10) incluant chacun une première électrode (16a) et une partie mobile (12) qui présente une électrode mobile (13) opposée à la première électrode (16a) ;
**caractérisé par**
la formation sur le substrat (100) d'une première partie de connexion (23 - 26) par laquelle les premières électrodes (16a) de la pluralité d'éléments de génération de puissance (10) sont connectées électriquement et mutuellement les unes aux autres et une deuxième partie de connexion (21, 22) par laquelle les électrodes mobiles (13) de la pluralité d'éléments de génération de puissance (10) sont connectées électriquement et mutuellement les unes aux autres.

2. Procédé de fabrication d'élément de génération de puissance (10) selon la revendication 1, comprenant en outre :
le chauffage du substrat (100) et la fourniture de tension à la première partie de connexion (23 - 26) et à la deuxième partie de connexion (21, 22).

3. Procédé de fabrication d'élément de génération de puissance (10) selon la revendication 1 ou la revendication 2, dans lequel :
l'élément de génération de puissance (10) inclut une deuxième électrode (16b) ;
l'électrode mobile (13) est prévue entre la première électrode (16a) et la deuxième électrode (16b) ; et
la première partie de connexion (23 - 26) connecte électriquement les premières électrodes (16a) et les deuxièmes électrodes (16b) de la pluralité d'éléments de génération de puissance (10).

4. Procédé de fabrication d'élément de génération de puissance (10) selon la revendication 3, dans lequel :
l'élément de génération de puissance (10) inclut une troisième électrode (16c) et une quatrième électrode (16d) prévues de sorte à interposer l'électrode mobile (13) entre elles ; et
la première partie de connexion (23 - 26) connecte électriquement les premières électrodes (16a), les deuxièmes électrodes (16b), les troisièmes électrodes (16c) et les quatrièmes électrodes (16d) de la pluralité d'éléments de génération de puissance (10).

5. Procédé de fabrication d'élément de génération de puissance (10) selon l'une quelconque des revendications 1 à 4, comprenant en outre :
la découpe des éléments de génération de puissance (10) à partir du substrat (100).

6. Procédé de fabrication d'élément de génération de puissance (10) selon l'une quelconque des revendications 1 à 5, comprenant en outre :
le retrait de chaque partie de la première partie de connexion (23-26) et de la deuxième partie de connexion (21, 22) prévue jusqu'à une partie d'extrémité de l'élément de génération de puissance (10).

7. Élément de génération de puissance (10) qui assure une génération de puissance par vibration, comprenant :
un substrat d'élément (100) pourvu d'une première électrode (16a) et d'une partie mobile (12) qui présente une électrode mobile (13) opposée à la première électrode (16a) ;
**caractérisé par**
une première partie de connexion (23-26) connectée à la première électrode (16a) et prévue jusqu'à une partie d'extrémité de l'élément de substrat (100) ; et
une deuxième partie de connexion (21, 22) connectée à la partie mobile (12) et prévue jusqu'à la partie d'extrémité de l'élément de substrat (100).

8. Élément de génération de puissance (10) selon la revendication 7, dans lequel :
l'élément de substrat (100) inclut une deuxième électrode (16b) ;
l'électrode mobile (13) est prévue entre la première électrode (16a) et la deuxième électrode (16b) ; et
l'élément de génération de puissance (10) comprend en outre une troisième partie de connexion (24) connectée à la deuxième électrode (16b) et prévue jusqu'à la partie d'extrémité du substrat d'élément (100).

9. Élément de génération de puissance (10) selon la revendication 8, comprenant en outre :
une troisième électrode (16c) et une quatrième électrode (16d) pourvue de l'électrode mobile (13) entre elles ;
une quatrième partie de connexion (25) connectée à la troisième électrode (16c) et prévue jusqu'à la partie d'extrémité du substrat d'élément (100) ; et
une cinquième partie de connexion (26) connectée à la quatrième électrode (16d) et prévue jusqu'à la partie d'extrémité du substrat d'élément (100).

10. Élément de génération de puissance (10) selon la revendication 9, dans lequel :
la troisième partie de connexion (24) et la quatrième partie de connexion (25) incluent chacune une pluralité de parties s'étendant dans différentes directions vers la partie d'extrémité du substrat d'élément (100).

11. Élément de génération de puissance (10) selon la revendication 10, dans lequel :
la deuxième électrode (16b) et la quatrième électrode (16d) sont connectées l'une à l'autre par le biais de la troisième partie de connexion (25) et de la cinquième partie de connexion (26).

12. Élément de génération de puissance (10) selon la revendication 11, dans lequel :
la première électrode (16a) et la troisième électrode (16c) sont connectées l'une à l'autre par le biais de la première partie de connexion (23) et de la quatrième partie de connexion (25).
